# EUROPÄISCHE PATENTSCHRIFT

(11) **EP 0 699 862 B1**
(45) Veröffentlichungstag und Bekanntmachung des Hinweises auf die Patenterteilung: **12.01.2000**
(21) Anmeldenummer: 95113829.6
(22) Anmeldetag: 04.09.1995
(51) Int. Cl.: F16L 55/162

(54) **Verfahren zur Sanierung von geneigten Rohrleitungen**
Process for relining inclined conduits
Procédé pour la rénovation de canalisations penchées

(30) Priorität: 02.09.1994 DE 4431155
(43) Veröffentlichungstag der Anmeldung: 06.03.1996
(73) Patentinhaber: RoSaTec Forschungs- und Entwicklungsgesellschaft für Rohrsanierungstechnologien mbH, 70199 Stuttgart (DE)
(72) Erfinder: Schmidt, Rüdiger, D-70197 Stuttgart (DE)
(74) Vertreter: Weiss, Ursula, Dr.

(56) Entgegenhaltungen:
- EP-A- 0 476 295
- DE-A- 3 204 386
- GB-A- 2 150 664
- GB-A- 2 274 699

## Beschreibung

Die Erfindung betrifft ein Verfahren zur Sanierung von geneigten Rohrleitungen.

Wenn geneigte Rohrleitungen saniert werden müssen, die sich in Häusern befinden und die daher in der Regel Falleitungen sind, ist es notwendig, die alten Rohrleitungen durch neue zu ersetzen. Weisen diese Häuser bewohnte Wohnungen auf, führt eine solche Sanierung zu erheblichen Beeinträchtigungen. Das Ersetzen der alten Rohrleitungen durch neue bedeutet in aller Regel für die betroffenen Wohnungen, daß sie für mehrere Wochen nicht mehr bewohnbar sind. Außerdem ist diese Sanierung mit erheblichen baulichen Maßnahmen und Kosten verbunden. Im Stand der Technik ist bislang kein Verfahren bekannt, mit dem solche Rohrleitungen, insbesondere Falleitungen, in der Weise saniert werden könnten, daß eine Auswechslung derselben unnötig wird.

Durch die DE-A-32 04 386 ist lediglich ein Verfahren zur Instandsetzung unterirdisch verlegter, horizontal verlaufender Rohre bekannt, bei dem zumindest ein Auftragekörper durch die Rohrleitung bewegt wird. Ein Beschichtungsmittel wird - in Bewegungsrichtung des Auftragekörpers betrachtet - vor diesem durch die zu sanierende Rohrleitung geführt und dadurch die Innenwandung der Rohrleitung beschichtet. Die Bewegung des Auftragekörpers durch die Rohrleitung kann durch einen Gas- oder Flüssigkeitsdruck oder durch einen Draht oder ein Kabel bewirkt werden, der auf die der Bewegungsrichtung entgegengesetzten Begrenzung des Auftragekörpers einwirkt. Dieses Verfahren ist jedoch für die Anwendung bei geneigten Rohrleitungen und insbesondere bei Falleitungen nicht anwendbar, da aufgrund des durch die Neigung der Rohrleitung entstehenden Gefälles ein - in Bewegungsrichtung des Auftragekörpers - vor diesem aufgebrachtes Beschichtungsmittel im wesentlichen von allein durch die Rohrleitung laufen und nicht mehr vom Auftragekörper vor sich hergeschoben würde. Dadurch wäre keine vollflächige Beschichtung der gesamten Rohrinnenwandung gewährleistet.

Der Erfindung liegt daher die Aufgabe zugrunde, ein Verfahren zur Sanierung von Rohrleitungen zur Verfügung zu stellen, das für geneigte Rohrleitungen, insbesondere Falleitungen, verwendbar ist und durch das ein Auswechseln der Rohrleitungen unnötig wird.

Gelöst wird diese Aufgabe durch die Kombination der Merkmale des Anspruchs 1. Dadurch, daß das niedrigviskose Beschichtungsmittel in Form einer Flüssigkeitssäule aufgebracht wird, kann der Auftragekörper unter Ausnutzung der Schwerkraft ohne weitere Hilfsmittel durch die Rohrleitung bewegt werden. Mit dem Auftragekörper bewegt sich auch die Flüssigkeitssäule rohrabwärts, wodurch ein Auskleiden der Innenwandung der so behandelten Rohrleitung mit einer aus dem Beschichtungsmittel gebildeten Schicht bewirkt wird. Dabei ist es notwendig, daß der Auftragekörper den lichten Querschnitt der Rohrleitung ganz ausfüllt, da sonst die Flüssigkeitssäule nicht gebildet werden kann. Durch das Ausnutzen der Schwerkraft wird außerdem erreicht, daß der Auftragekörper die zu sanierende Rohrleitung mit geringer Geschwindigkeit passiert, so daß er problemlos an der dafür vorgesehenen Stelle am unteren Ende der Rohrleitung wieder aus dem Rohr entnommen werden kann und nicht durch eine zu hohe Geschwindigkeit die Rohrleitung beschädigt.

Rohrleitungen, die als Falleitungen in Gebäuden ausgebildet sind, weisen regelmäßig sogenannte Etagierungen auf. Dies sind innerhalb der Falleitungen eingebaute Knie, die verhindern sollen, daß das Wasser aus großer Höhe ungehindert durch die Leitung fließt und somit mit großer Wucht am unteren Ende der Leitung auftrifft, wodurch Beschädigungen der Rohrleitung unvermeidlich wären. Diese Etagierungen bilden jedoch für die Sanierung von solchen Rohrleitungen Schwierigkeiten, da sie nicht leicht zu überwinden sind. Erfindungsgemäß wurde diese Schwierigkeit dadurch überwunden, daß der Auftragekörper im wesentlichen kompressibel ist, wodurch er sich den durch die Etagierung gegebenen Windungen in der Rohrleitung anpassen und diese passieren kann.

Vorzugsweise wird als Auftragekörper ein Schaumstoffkörper verwendet. Ein solcher Schaumstoffkörper ist für die Anforderungen, die an Auftragekörper bei der Sanierung von Rohrleitungen, die Falleitungen sind, gestellt werden, ausreichend kompressibel. Da der Schaumstoffkörper in Bewegungsrichtung vorzugsweise eine größere Ausdehnung aufweist als senkrecht zur Bewegungsrichtung und besonders bevorzugt einen im wesentlichen ovalen Querschnitt aufweist, ermöglicht die zwischen der Innenwandung der Rohrleitung und dem Auftragekörper entstehende Reibung ein langsames Gleiten des Auftragekörpers durch die Rohrleitung, wobei dennoch die Flüssigkeitssäule genügend groß gehalten werden kann, um insbesondere bei der Beschichtung von in die Rohrleitung einmündenden Abzweigungen zu gewährleisten, daß genügend Beschichtungsmittel in das (die) einmündende Abzweigungsrohr(e) hineinlaufen kann.

In einer bevorzugten Ausführungsform der Erfindung wird als Beschichtungsmittel ein flüssiges Expoxidharz verwendet. Diese zeichnen sich üblicherweise dadurch aus, daß sie selbstaushärtend sind.

In einer weiteren Ausführungsform des erfindungsgemäßen Verfahrens wird der Auftragekörper zusätzlich zu der einwirkenden Schwerkraft zumindest teilweise mittels einer Zug- und/oder Schubvorrichtung durch die Rohrleitung bewegt. Dabei wird die Zugvorrichtung, die beispielsweise ein Seil oder eine Kette sein kann, in an sich bekannter Weise am Auftragekörper befestigt. Die auf den Auftragekörper einwirkende Zugkraft wirkt unterstützend auf die unter Ausnutzung der Schwerkraft erfolgende Bewegung des Auftragekörpers durch die Rohrleitung. Als Schubvorrichtung wird vorzugsweise ein Schubstab eingesetzt, der den Vorteil hat, daß er nicht am Auftragekörper befestigt werden muß.

Darüberhinaus kann auch eine Haltevorrichtung vorgesehen sein, durch die die Bewegung des Auftragekörpers durch die Rohrleitung für eine definierte Zeitspanne aufgehalten wird. Das kann dann von Vorteil sein, wenn die Rohrleitung starke Risse aufweist, um hier ein möglichst vollständigs Ausfüllen dieser Risse mit dem Beschichtungsmittel zu gewährleisten. Außerdem kann ein solches Aufhalten der Bewegung des Auftragekörpers dann von Vorteil sein, wenn Abzweigungen erreicht werden, da dann das Beschichtungsmittel ausreichend Zeit hat, in das entsprechende Abzweigungsrohr hineinzulaufen.

Erfindungsgemäß kann vorgesehen sein, daß der Auftragekörper wiederholt, vorzugsweise zweimal, besonders bevorzugt drei- oder viermal durch die Rohrleitung bewegt wird. Dadurch läßt sich individuell und in Abhängigkeit vom jeweils verwendeten Beschichtungsmittel die Schichtdicke, mit der die Rohrinnenwandung ausgekleidet wird, einstellen.

Je nach Sanierungsbedürftigkeit der Rohrleitung kann es notwendig werden, daß der Bewegung des Auftragekörpers durch die Rohrleitung ein Reinigungsschritt und/oder eine Behandlung mit Tiefgrund vorgeschaltet wird. Durch die Behandlung mit Tiefgrund kann dann sichergestellt werden, daß eventuell nach dem Reinigungsschritt noch vorhandene, von der gereinigten Innenwandung der Rohrleitung stammende Schmutz-, Rost- oder Rußpartikel gebunden und festgehalten werden können, und somit ein Anhaften des Beschichtungsmittels an der Innenwandung nicht verhindert wird.

In einer bevorzugten Verwendung des erfindungsgemäßen Verfahrens können Rohrleitungen, die aus Teilabschnitten unterschiedlichen Durchmessers bestehen, saniert werden. Dabei wird der Auftragekörper gerade so bemessen, daß er den lichten Querschnitt desjenigen Teilabschnittes der Rohrleitung ganz ausfüllt, der den größten Durchmesser aufweist. Aufgrund der Kompressibilität des Auftragekörpers ist es dann gewährleistet, daß beim Übergang zu dem Teilabschnitt mit einem geringeren Durchmesser der Auftragekörper zusammengedrückt und so auch durch den Teilabschnitt mit dem geringeren Durchmesser durchgeführt werden kann. Dies gilt entsprechend, wenn zunächst ein Teilabschnitt mit geringerem Durchmesser zu sanieren ist, an den sich ein Teilabschnitt mit größerem Durchmesser anschließt. In diesem Fall kann sich dann der Auftragekörper ausdehnen, wobei immer darauf zu achten ist, daß der Auftragekörper so dimensioniert ist, daß er den lichten Querschnitt des Teilabschnitts mit dem größten Durchmesser ganz ausfüllt.

Die Erfindung ist in der folgenden Beschreibung anhand der Zeichnung im einzelnen erläutert:

Es zeigen:
- Fig. 1: einen schematisch vereinfacht dargestellten Schnitt durch eine Rohrleitung mit einer Etagierung, wobei das Beschichten eines Rohrleitungsabschnittes, in das Abzweigungen münden, veranschaulicht wird und

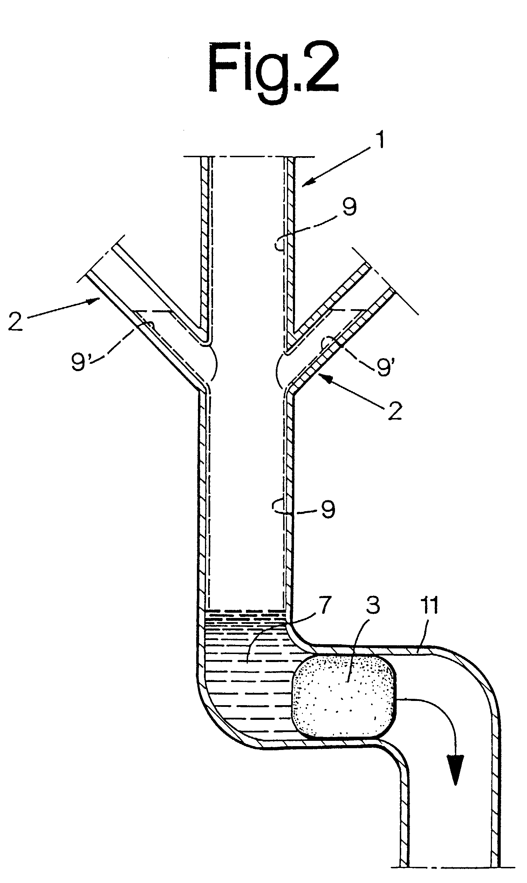

- Fig. 2: eine der Fig. 1 entsprechene Abbildung, wobei jedoch die Abzweigungen bereits beschichtet sind.

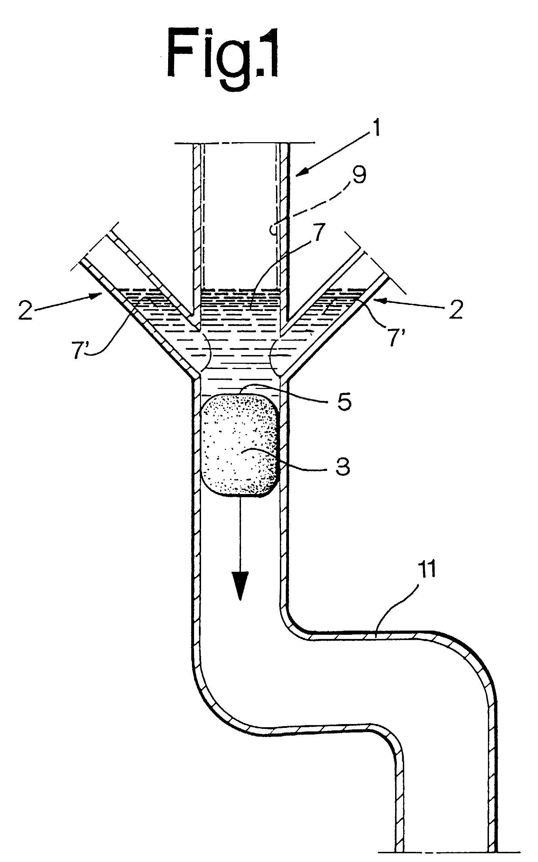

In Fig. 1 ist eine Rohrleitung 1 in Form einer Falleitung dargestellt, wie sie insbesondere in Gebäuden vorzufinden sind. In diese Rohrleitung 1 münden zwei Abzweigungen 2. Um die Rohrleitung 1 zu sanieren, kann diese zunächst gereinigt und anschließend mit einem Tiefgrund versehen werden. Durch die Behandlung mit Tiefgrund werden eventuell vorhandene, lose Schmutz-, Rost- oder Rußpartikel gebunden und festgehalten, die sonst ein Anhaften des Beschichtungsmittels an der Innenwandung der Rohrleitung 1 verhindern könnten. Die nachfolgende Beschichtung wird durch die Behandlung mit Tiefgrund nicht nachteilig beeinflußt, weil dieser vollständig in den Untergrund einzieht. Dann wird ein Auftragekörper 3 vorzugsweise über die bei Falleitungen übliche, in der Zeichnung nicht dargestellte Entlüftung in die Rohrleitung 1 eingebracht. Als Auftragekörper 3 wird dabei vorzugsweise ein Schaumstoffkörper verwendet, der in Bewegungsrichtung, die in den Figuren mit einem Pfeil gekennzeichnet ist, eine größere Ausdehnung aufweist, als senkrecht zur Bewegungsrichtung und vorzugsweise einen im wesentlichen ovalen Querschnitt hat. Das Material zur Ausbildung des Auftragekörpers 3 ist jedoch nicht auf Schaumstoff begrenzt. Für die Anwendung des erfindungsgemäßen Verfahrens kommt jede Ausbildung des Auftragekörpers in Betracht, die seine Kompressibilität gewährleistet. Der Auftragekörper 3 füllt den lichten Querschnitt der Rohrleitung 1 ganz aus. An der der Bewegungsrichtung entgegengesetzten Begrenzung 5 des Auftragekörpers 3 wird nunmehr ein niedrigviskoses Beschichtungsmittel, vorzugsweise ein flüssiges, selbstaushärtendes Epoxidharz, in Form einer Flüssigkeitssäule 7 aufgebracht. Die Höhe der Flüssigkeitssäule 7 wird dabei gerade so gewählt, daß unter Ausnutzung der Schwerkraft die Reibung des Auftragekörpers 3 an der Rohrleitungsinnenwandung gerade so weit überwunden wird, daß der Auftragekörper 3 in der gewünschten Geschwindigkeit durch die Rohrleitung 1 bewegt wird.

Bei der Sanierung von Rohrleitungen 1 sind grundsätzlich die in diese mündenden Abzweigungen 2 besonders problematisch, da auch diese Abzweigungen 2 zumindest in einem endlichen Teilabschnitt oberhalb der Einmündung in die Rohrleitung 1 gleichfalls durch Aufbringung einer Beschichtung saniert werden sollten. Durch das erfindungsgemäße Verfahren wird diese teilweise Sanierung der Abzweigungen 2 in besonders günstiger und einfacher Weise dadurch ermöglicht, daß das die Flüssigkeitssäule 7 bildende Beschichtungsmittel dann, wenn der Auftragekörper 3 die Einmündung der Abzweigung 2 in die Rohrleitung passiert hat, in diese Abzweigung 2 hineinsteigt, um bei weiterer Abwärtsbewegung des Auftragekörpers 3 zusammen mit der Flüssigkeitssäule, die sich noch in der Rohrleitung 1 befindet, abzusinken und so aus der Abzweigung 2 herauszufließen. Zurück bleibt sowohl eine Beschichtung 9 der Innenwandung der Rohrleitung 1 als auch jeweils eine Beschichtung 9' der Innenwandung jeder der Abzweigungen 2. Die Größe des in jeder Abzweigung 2 beschichteten Teilabschnittes richtet sich dabei nach der Steighöhe der Flüssigkeitssäule 7 in der Abzweigung 2.

Rohrleitungen 1, die als Falleitungen ausgebildet sind, weisen in der Regel sogenannte Etagierungen 11 auf. Das sind innerhalb der Rohrleitung 1 vorgesehene Knie, die den freien Fall des durch die Rohrleitung 1 fließenden Wassers verhindern sollen, damit durch die Wucht des sonst am Ende der Rohrleitung 1 auftreffenden Wassers keine Beschädigungen auftreten. Diese Etagierungen erschweren die Sanierung von in Gebäuden angebrachten Rohrleitungen 1 erheblich. Der erfindungsgemäße Auftragekörper 3 kann jedoch ganz einfach durch diese als Knie ausgebildeten Etagierungen 11 durchgeführt werden, da er zum einen unter Ausnutzung der Schwerkraft durch die Flüssigkeitssäule 7 nach unten bewegt wird und zum anderen aufgrund seiner Kompressibilität sich dem jeweils gebogenen Abschnitt der Etagierung 11 anpassen kann.

Bei einer in der Zeichnung nicht dargestellten Weiterbildung des erfindungsgemäßen Verfahrens wird der Auftragekörper 3 entweder an seiner in Bewegungsrichtung befindlichen Begrenzung in an sich bekannter Weise mit einer Zugvorrichtung, beispielsweise ein Seil oder eine Kette, verbunden oder an der der Bewegungsrichtung entgegengesetzten Begrenzung 5 des Auftragekörpers 3 greift eine Schubvorrichtung in Form eines Schubstabes an, wodurch der Auftragekörper 3 zusätzlich zu der einwirkenden Schwerkraft durch die Rohrleitung 1 bewegt wird. Diese zusätzlich wirkenden Zug- oder Schubkräfte können innerhalb der gesamten zu sanierenden Rohrleitung 1 oder nur auf einem Teilabschnitt dieser Rohrleitung 1 zur Anwendung kommen. Letzteres ist beispielsweise dann vorteilhaft, wenn ein besonders schwer zu passierender Rohrbereich erreicht wird.

Des weiteren kann die Bewegung des Auftragekörpers 3 durch die Rohrleitung 1 mittels einer in der Zeichnung nicht dargestellten Haltevorrichtung für eine definierte Zeitspanne aufgehalten werden. Die dabei verwendete Haltevorrichtung kann genauso ausgebildet sein, wie die zuvor beschriebene Zugvorrichtung, allerdings mit dem Unterschied, daß sie dann an der der Bewegungsrichtung entgegengesetzten Begrenzung 5 des Auftragekörpers 3 angebracht ist. Dann kann dieselbe Vorrichtung einmal als Halte- und ein anderes Mal als Zugvorrichtung dienen. Es ist aber auch möglich, als Haltevorrichtung einen Stab zu verwenden, der von unten her, beispielsweise über eine Putzöffnung, in die Rohrleitung eingeführt wird. Mittels dieser Haltevorrichtung wird der Auftragekörper 3 bei seiner Bewegung durch die Rohrleitung 1 in solchen Bereichen für eine definierte Zeitspanne aufgehalten, wo ausgeprägte Risse und/oder Abzweigungen 2 vorhanden sind. Dann hat das Beschichtungsmittel Zeit, um vollständig in den oder die Risse bzw. Abzweigungen 2 einzudringen.

Als flüssiges Epoxidharz, das als Beschichtungsmittel bei der erfindungsgemäßen Sanierung eingesetzt wird, können handelsübliche flüssige Epoxidharze verwendet werden. Um dabei eine ausreichende Beschichtung der Innenwandung der zu sanierenden Rohrleitung 1 zu gewährleisten, ist es bevorzugt, das erfindungsgemäße Verfahren wiederholt anzuwenden. Dabei hat es sich als besonders günstig erwiesen, das Verfahren drei- oder viermal anzuwenden, bedingt dadurch, daß ein niedrigviskoses, flüssiges Beschichtungsmittel zur Anwendung kommt. Der die Sanierung der jeweiligen Rohrleitung 1 durchführende Fachmann hat dabei die Möglichkeit, bei den wiederholten Beschichtungsvorgängen zwischen Beschichtungsvorgängen allein unter Ausnutzung der Schwerkraft und solchen, bei denen gleichzeitig eine Zug-, Schub- und/oder Haltevorrichtung eingesetzt wird, zu variieren, je nachdem, wie es die zu sanierende Rohrleitung 1 erfordert. Dabei hat es sich als vorteilhaft erwiesen, daß der letzte Beschichtungsdurchgang ohne Zug-, Schub- und/oder Haltevorrichtung durchgeführt wird.

Eine besondere Anwendung des erfindungsgemäßen Sanierungsverfahrens liegt in der Sanierung von Rohrleitungen 1, die aus Teilabschnitten unterschiedlichen Durchmessers bestehen. Dabei wird an sich in der zuvor beschriebenen Weise verfahren, wobei darauf zu achten ist, daß der Auftragekörper 3 gerade so bemessen wird, daß er den lichten Querschnitt desjenigen Teilabschnittes der Rohrleitung 1 ganz ausfüllt, der den größten Durchmesser aufweist. Aufgrund der Kompressibilität des Auftragekörpers 1 ist es dann gewährleistet, daß beim Übergang zu dem Teilabschnitt mit dem geringeren Durchmesser der Auftragekörper 1 zusammengedrückt und so auch durch den Teilabschnitt mit dem geringeren Durchmesser durchgeführt werden kann. Dies gilt entsprechend, wenn zunächst ein Teilabschnitt mit geringerem Durchmesser zu sanieren ist, an den sich ein Teilabschnitt mit größerem Durchmesser anschließt. In diesem Fall kann sich dann der Auftragekörper 3 ausdehnen, wobei er wiederum so dimensioniert sein muß, daß er den lichten Querschnitt des Teilabschnittes mit dem größten Durchmesser noch ganz ausfüllt.

Eine weitere Anwendung des erfindungsgemäßen Verfahrens liegt im Bereich von lebensmittelproduzierenden Betrieben oder Gastronomiebetrieben. In diesen Bereichen ist die Gewährleistung von Freiheit von Ungeziefer einerseites zwingend, andererseits problematisch. Dabei ist es möglich, daß insbesondere ältere Rohrleitungen zwar an sich nicht sanierungsbedürftig sind, aber eine rauhe Innenwandung aufweisen. Ungeziefer, insbesondere die im Lebensmittelbereich häufig auftretenden Kakerlaken, sind in der Lage, solche rauhen Innenwandungen von Rohrleitungen 1 zu passieren und sind daher schwer zu bekämpfen. Nach der Anwendung des erfindungsgemäßen Sanierungsverfahrens wird jedoch eine im wesentlichen glatte Innenwandung gewährleistet, an denen sich das genannte Ungeziefer nicht mehr fortbewegen kann.

Das erfindungsgemäße Sanierungsverfahren ist nicht auf die Anwendung bei Falleitungen beschränkt, sondern kann beispielsweise auch bei geneigten Grundleitungen eingesetzt werden. Es sollte lediglich ein solches Gefälle der jeweiligen Rohrleitung 1 vorhanden sein, das die Ausnutzung der Schwerkraft ermöglicht, ohne eine allzu große Höhe der Flüssigkeitssäule zu erfordern, was aufgrund der dann erforderlichen Menge an Beschichtungsmittel nicht mehr wirtschaftlich ist.

Das erfindungsgemäße Verfahren ist auch nicht auf im wesentlichen runde Rohrleitungen beschränkt, sondern kann auch bei anderen Leitungen mit nichtrundem Querschnitt, beispielsweise Schornsteinen, eingesetzt werden.

## Patentansprüche

1. Verfahren zur Sanierung von geneigten Rohrleitungen, bei dem ein Auftragekörper (3), der den lichten Querschnitt der Rohrleitung (1) ganz ausfüllt, unter Ausnutzung der Schwerkraft durch die Rohrleitung (1) bewegt wird, wobei an der der Bewegungsrichtung entgegengesetzten Begrenzung (5) des Auftragekörpers (3) ein niedrigviskoses Beschichtungsmittel in Form einer Flüssigkeitssäule (7) aufgebracht wird.

2. Verfahren nach Anspruch 1, dadurch gekennzeichnet, daß der Auftragekörper (3) im wesentlichen kompressibel ist.

3. Verfahren nach Anspruch 1 oder 2, dadurch gekennzeichnet, daß als Auftragekörper (3) ein Schaumstoffkörper verwendet wird, der in Bewegungsrichtung eine größere Ausdehnung aufweist als senkrecht zur Bewegungsrichtung.

4. Verfahren nach Anspruch 3, dadurch gekennzeichnet, daß der Schaumstoffkörper (3) im wesentlichen einen ovalen Querschnitt aufweist.

5. Verfahren nach einem der Ansprüche 1 bis 4, dadurch gekennzeichnet, daß als Beschichtungsmittel ein flüssiges Epoxidharz verwendet wird.

6. Verfahren nach einem der Ansprüche 1 bis 5, dadurch gekennzeichnet, daß der Auftragekörper (3) zusätzlich zu der einwirkenden Schwerkraft zumindest teilweise mittels einer Zug- und/oder Schubvorrichtung durch die Rohrleitung (1) bewegt wird.

7. Verfahren nach Anspruch 6, dadurch gekennzeichnet, daß die Bewegung des Auftragekörpers (3) durch die Rohrleitung (1) mittels einer Haltevorrichtung für eine definierte Zeitspanne aufgehalten wird.

8. Verfahren nach einem der Ansprüche 1 bis 7, dadurch gekennzeichnet, daß der Auftragekörper (3) wiederholt, vorzugsweise zweimal, besonders bevorzugt drei- oder viermal durch die Rohrleitung (1) bewegt wird.

9. Verfahren nach einem der Ansprüche 1 bis 8, dadurch gekennzeichnet, daß der Bewegung des Auftragekörpers (3) durch die Rohrleitung (1) ein Reinigungsschritt und/oder eine Behandlung mit Tiefgrund vorgeschaltet wird.

10. Verfahren nach einem der Ansprüche 2 bis 9, dadurch gekennzeichnet, daß es als Sanierungsverfahren für Rohrleitungen, bestehend aus Teilabschnitten unterschiedlichen Durchmessers verwendet wird.

## Claims

1. A method of renewing inclined pipe conduits, in which an application body (3) which completely fills the clear cross section of the pipe conduit (1) is moved through the pipe conduit (1) using the force of gravity, a low-viscosity coating medium in the form of a column of liquid (7) being applied at the end (5) of the application body (3) opposite the direction of motion.

2. A method according to claim 1, characterized in that the application body (3) is essentially compressible.

3. A method according to either of claims 1 and 2, characterized in that a foam body which has a greater extent in the direction of motion than perpendicular to the direction of motion is used as an application body (3).

4. A method according to claim 3, characterized in that the foam body (3) has an essentially oval cross section.

5. A method according to any one of claims 1 to 4, characterized in that a liquid epoxy resin is used as the coating medium.

6. A method according to any one of claims 1 to 5, characterized in that the application body (3) is moved through the pipe conduit (1) not only by the force of gravity acting on it but also at least partially by means of a pulling and/or pushing device.

7. A method according to claim 6, characterized in that the movement of the application body (3) through the pipe conduit (1) is halted for a defined period of time by means of a holding device.

8. A method according to any one of claims 1 to 7, characterized in that the application body (3) is moved repeatedly through the pipe conduit (1), preferably twice and particularly preferably three or four times.

9. A method according to any one of claims 1 to 8, characterized in that the movement of the application body (3) through the pipe conduit (1) is preceded by a cleaning step and/or a treatment with primer.

10. A method according to any one of claims 2 to 9, characterized in than it is used as a renewal method for pipe conduits comprising sections of different diameter.

## Revendications

1. Procédé de rénovation de canalisations inclinées, suivant lequel un corps applicateur (3) remplissant complètement la section intérieure de la canalisation (1) est déplacé à travers la canalisation (1), avec utilisation de la gravité, un produit de revêtement de faible viscosité, étant appliqué sous la forme d'une colonne de liquide (7) sur le côté de délimitation (5) du corps applicateur (3) opposé au sens de déplacement.

2. Procédé suivant la revendication 1, caractérisé par le fait que le corps applicateur (3) est essentiellement compressible.

3. Procédé suivant la revendication 1 ou 2, caractérisé par le fait que le corps applicateur (3) est un corps en matière cellulaire (mousse), présentant dans la direction de déplacement des dimensions plus importantes que perpendiculairement à la direction de déplacement.

4. Procédé suivant la revendication 3, caractérisé par le fait que le corps (3) en matière cellulaire présente une section transversale essentiellement ovale.

5. Procédé suivant l'une des revendications 1 à 4, caractérisé par le fait qu'une résine époxy liquide est utilisée comme produit de revêtement.

6. Procédé suivant l'une des revendications 1 à 5, caractérisé par le fait que le corps applicateur (3) est déplacé à travers la canalisation (1), outre par l'effet de la gravité, au moins partiellement au moyen d'un dispositif de traction et/ou de poussée.

7. Procédé suivant la revendication 6, caractérisé par le fait que le déplacement du corps applicateur (3) à travers la canalisation (1) est arrêté pendant une durée définie au moyen d'un dispositif de retenue.

8. Procédé suivant l'une des revendications 1 à 7, caractérisé par le fait que le corps applicateur (3) est déplacé de façon répétée, de préférence au moins deux fois, d'une manière particulièrement préférée au moins trois ou quatre fois à travers la canalisation (1).

9. Procédé suivant l'une des revendications 1 à 8, caractérisé par le fait que le déplacement du corps applicateur (3) à travers la canalisation (1) est précédé d'une étape de nettoyage et/ou de traitement à l'aide d'un produit de fond.

10. Procédé suivant l'une des revendications 2 à 9, caractérisé par le fait qu'il est utilisé en tant que procédé de rénovation pour des canalisations composées de tronçons de diamètres différents.
